Europäisches Patentamt

(19) European Patent Office

Office européen des brevets

(11) Numéro de publication: **0 026 137**
**B2**

(12) **NOUVEAU FASCICULE DE BREVET EUROPEEN**

(45) Date de publication du nouveau fascicule du brevet: **17.10.90**

(51) Int. Cl.⁵: **F 16 D 66/02**

(21) Numéro de dépôt: **80401327.4**

(22) Date de dépôt: **18.09.80**

(54) Témoins d'usure pour plaquettes de freins.

(30) Priorité: **25.09.79 FR 7923821**
**23.06.80 FR 8013892**

(43) Date de publication de la demande:
**01.04.81 Bulletin 81/13**

(45) Mention de la délivrance du brevet:
**18.07.84 Bulletin 84/29**

(45) Mention de la decision concernant l'opposition:
**17.10.90 Bulletin 90/42**

(84) Etats contractants désignés:
**DE GB IT**

(56) Documents cités:
**DE-A-2 529 843**
**DE-A-2 827 035**
**DE-U-7 632 112**
**FR-A-2 041 433**
**FR-A-2 287 625**
**FR-A-2 385 950**
**US-A-3 716 113**
**US-A-3 783 979**
**US-A-3 976 167**
**US-A-3 986 164**

(73) Titulaire: **ABEX EQUIPEMENT S.A.**
**58, rue Juliette-Adam**
**F-91190 Gif-sur-Yvette (FR)**

(72) Inventeur: **Fusillier, Jean-Claude E.**
**81, Avenue de Paris**
**F-95620 Parmain (FR)**
Inventeur: **Kazuro, Jean M.**
**2, Square de Compiègne**
**F-60400 Noyon (FR)**

(74) Mandataire: **Clanet, Denis et al**
**Cabinet Beau de Loménie 55, rue d'Amsterdam**
**F-75008 Paris (FR)**

EP 0 026 137 B2

Courier Press, Leamington Spa, England.

**Description**

La présente invention a pour objet un perfectionnement aux témoins d'usure pour plaquettes de freins.

Dans certains cas, les freins à disque et plus particulèrement les plaquettes de freins sont équipées de témoins d'usure isolés de la masse du véhicule et qui, par contact avec le disque relié à la masse, provoquent l'allumage d'un voyant lumineux sur le tableau de bord du véhicule.

Ce contact s'effectue à une distance du support métallique de la garniture de friction comprise entre 1 et 2,5 mm, ceci afin d'éviter que le disque ne soit détérioré par le frottement du support métallique et que les performances de freinage ne se trouvent diminuées.

Si le contact du témoin d'usure avec le disque s'effectue au plus près de l'armature métallique, le voyant d'alerte de fin d'utilisation des garnitures s'allumera plus tard que si la contact est plus éloigné de l'armature, donc plus proche du disque.

Il est donc évident que, pour user au maximum la garniture de frein et augmenter la longévité des garnitures de plusieurs centaines à plusieurs milliers de kilomètres, il est nécessaire que le contact entre le témoin d'usure et le disque de frein s'effectue au plus près du support.

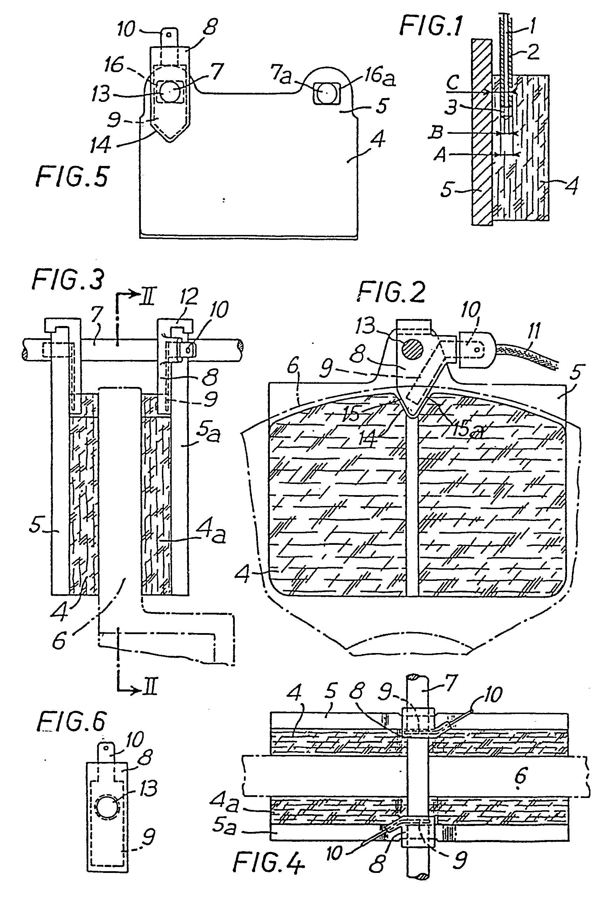

Cependant, sur certains types de freins existants, le principe le plus communément utilisé de témoin d'usure consiste en un fil conducteur 1 entouré d'une gains isolante 2 (figure 1) et introduit dans un trou 3 préalablement percé dans une garniture de friction 4 montée sur un organo de support 5. Ce fil est maintenu dans la garniture par collage.

Afin d'assurer les conditions d'isolation, le fil isolé a un diamètre A qui varie entre 2,5 et 3 mm pour un diamètre B du fil d'environ 1 mm. Le trou percé dans la garniture ne peut être réalisé dans les conditions de grande série au'à une distance minimale du support 5 et avec une tolérance de position par rapport au support qui ne peut être inférieure à +0,20 mm, ce qui, dans les cas les plus défavorables, peut provoquer le contact et l'allumage du voyant à une cote C de limite d'usure d'environ 2,5 mm par rapport à l'organe de support métallique 5.

Ceci est donc un inconvénient car la garniture de friction pourrait être usée suivant une épaisseur supplémentaire de 1,5 mm sans modifier les performances ou altérer la sécurité.

De plus, dans certains cas, les réparateurs au cours de révisions périodiques changent systématiquement les plaquettes de freins à disque sans que l'usure de la garniture de frein atteigne la cote C d'allumage du témoin d'usure.

Dans ce cas, le fil témoin d'usure faisant partie intégrante de la plaquette de frein n'est pas réutilisable bien que n'ayant pas servi; ceci peut être considéré comme un autre inconvénient de l'emploi d'un fil témoin d'usure.

On connaît également un document DE—A—25.29.843, concernant un témoin d'usure pour garniture de frein à disque comportant une plaque en matière isolante dans laquelle est noyé un organe conducteur présentant un élément de raccordement au circuit électrique de signalisation, ladite plaque étant montée de façon rapportée sur le support de la garniture de friction et maintenue au moyen d'un organe de fixation et ressort faisant partie de l'étrier de frein.

Toutefois cette disposition nécessite une plaque s'étendant sur toute la largeur de la garniture de frein et ne comportant aucun moyen d'accrochage sur l'organe de support de la garniture de friction.

Le dispositif de témoin d'usure suivant l'invention a pour objet de remiédier à ces inconvénients.

Conformément à l'invention le témoir, d'usure comportant une plaquette en matière isolante dans laquelle est noyé un organe conducteur présentant une fiche de raccordement au circuit électrique de signalisation, ladite plaquette isolante étant montée de façon rapportée sur le support de la garniture de friction et maintenue au moyen d'un organe de fixation faisant partie de l'étrier de frein caractérisé en ce que sur l'un de ses bords la plaquette isolante présente un étrier venu d'une piece avec la plaquette qui est engagé sur l'un des bords du support de garniture de friction.

Le témoin d'usure perfectionné suivant l'invention présente des avantages en ce qui concerne la fabrication des plaquettes du fait qu'il permet d'éviter les opérations de perçage, collage, mise en place du fil et séchage de la colle.

Cette disposition a encore pour avantage de ne necessiter aucune modification essentielle de la plaque de support et de n'entraîner aucun affaiblissement de ladite plaque comme cela peut se produire dans certains dispositifs connus où il est prévu de percer une ouverture dans la plaque pour fixer le témoin d'usure.

D'autres caractéristiques et avantages de l'invention seront mieux compris à la lecture de la description qui va suivre de plusieurs modes de réalisation et en se référant aux dessins annexés dans lesquels:

la figure 1 est une vue en coupe transversale d'une plaquette de frein, munie d'un témoin d'usure de type connu;

la figure 2 est une vue en élévation de face d'une plaquette de frein munie d'un témoin d'usure perfectionné suivant l'invention;

la figure 3 est une vue en élévation latérale d'un disque et des plaquettes de frein munies de témoins d'usure suivant l'invention;

la figure 4 est une vue en plan des plaquettes de frein et des témoins d'usure représentés à la figure 3;

la figure 5 est une vue en élévation de face d'une plaquette de frein comportant un autre mode de réalisation de témoin d'usure;

la figure 6 est une vue en élévation d'un autre mode de réalisation d'un témoin d'usure;

la figure 7 est une vue en élévation de face d'un mode de réalisation d'une plaquette de frein munie d'un témoin d'usure;

la figure 8 est une vue en plan du dispositif représente à la figure 7;

la figure 9 est une vue en coupe transversale du dispositif représenté à la figure 7;

Aux figures 2, 3 et 4, on a représenté un disque de frein 6 qui est disposé entre deux plaquettes de freinage constituées d'une garniture de friction 4, 4a fixée sur un organe de support métallique 5, 5a. Les organes de support 5, 5a sont montés de façon connue sur une goupille 7 d'étrier de frein.

Sur chacun des organes de support 5, 5a, est monté un témoin d'usure qui est constitué d'une plaquette 8 en matière isolante dans laquelle est noyé un organe conducteur plat 9 dont l'une des faces est dirigée en regard du disque 6 avec lequel il est susceptible de venir en contact lorsque les garnitures de friction 5, 5a et la plaquette 8 sont usées.

A l'une de ses extrémités, l'organe conducteur plat 9 présente une fiche de raccordement 10 à un fil 11 d'un circuit électrique comportant une source d'alimentation et un voyant lumineux sur le tableau de bord du véhicule.

A sa partie supérieure, la plaquette 8 en matière isolante présente un étrier 12 qui est engagé sur l'organe de support 5, 5a.

Par ailleurs, il est prévu dans la plaquette 8 en matière isolante un trou 13 isolé de l'organe conducteur 9 et dans lequel est engagée la goupille 7 d'étrier de frein.

A sa partie inférieure, la plaquette 8 est engagée dans un logement 14 ménagé dans la garniture de friction 4, 4a de la plaquette de freinage, ladite partie inférieure présentant deux faces inclinées 15, 15a en forme de V qui correspondant à des faces inclinées du logement 14.

A la figure 5, on a représententé une variante de réalisation d'une plaquette de frein comportant deux goupilles 7, 7a d'étrier de frein qui sont engagées dans des trous 16, 16a prévus dans les supports 5, 5a.

Sur l'une des goupilles 7, est monté un témoin d'usure qui est constitué, comme dans le mode de réalisation précédent, d'une plaquette 8 en matière isolante dans laquelle est noyé un organe conducteur plat 9 qui comporte une fiche de raccordement 10.

Dans sa partie centrale, la plaquette 8 présente un trou 13 isolé dans lequel est engagée la goupille 7.

A sa partie inférieure, la plaquette 8 est engagée par une partie en forme de V dans un logement 14, de forme correspondante, ménagé dans la garniture de friction 4.

A la figure 6, on a représenté une autre forme de réalisation du témoin d'usure qui est constitué de la même manière que dans l'exemple précédent, mais dont la partie inférieure est quadrangulaire.

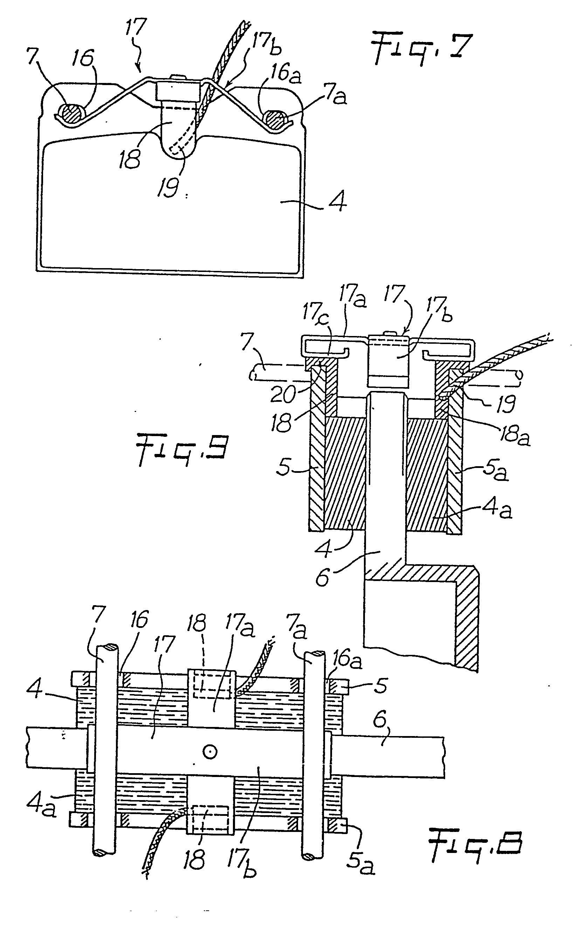

Aux figures 7, 8 et 9, on a représenté un disque de frein 6 qui est disposé entre deux plaquettes de freinage, constituées d'une garniture de friction 4, 4a, fixées sur un organe de support métallique 5, 5a. Les organes de support 5, 5a sont montés de façon coulissante sur des goupilles 7, 7a engagées dans des trous 16, 16a des organes de support.

Entre les organes de support 5, 5a est disposé un ressort 17 en forme de croix que est constitué d'une branche élastique 17a exerçant une poussée sur les organes de support 5, 5a, ladite branche 17a étant fixée sur une aile 17b dont l'axe longitudinal est situé suivant le plan de symétrie du disque de friction 6, ladite aile 17b étant montée sur les goupilles 7, 7a sur lesquelles coulissent les organes de support.

Les plaquettes isolantes des témoins d'usure 18, 18a sont munies d'un organe conducteur 19 noyé dans la paroi de la plaquette qui présente sur l'un de ses bords en étrier 20 qui est engagé sur l'un des bords de l'organe de support 5, 5a de garniture d'étanchéité. L'étrier 20 est maintenu en position contre le bord de l'organe de support 5, 5a par la patte repliée 17c qui présente un caractère d'élasticité.

## Revendications

1. Témoins d'usure pour garnitures de frein à disques, comportant une plaquette (8) en matière isolante dans laquelle est noyé un organe conducteur (9) présentant une fiche de raccordement (10) au circuit électrique de signalisation, ladite plaquette isolante (8) étant montée de façon rapportée sur le support (5, 5a) de la garniture de friction et maintenue au moyen d'un organe de fixation (7) faisant partie de l'étrier de frein, caractérisé en ce que sur l'un de des bords, la plaquette isolante (8) présente un étrier (12) venue d'une pièce avec la plaquette (8) qui est engagé sur l'un des bords du support (5, 5a) de garniture de friction.

2. Témoins d'usure suivant la revendication 1, caractérisée en ce que la plaquette (8), en matière isolante du témoin d'usure est encastrée à sa partie inférieure dans une encoche (14) prévue dans la garniture de friction (4, 4a).

3. Témoins d'usure suivant la revendication 1, caractérisé en ce que à sa partie inférieure la plaquette isolante (8) du témoin d'usure présente deux faces inclinées (15, 15) en V qui correspondent à des faces inclinées du logement (14) dans lequel est engagée la partie inférieure de la plaquette isolante (8).

4. Témoins d'usure suivant la revendication 1, caractérisé en ce que la plaquette isolante (18, 18a) est maintenue contre ledit bord par l'une des branches élastiques (17c) transversales d'un ressort (17) en forme de croix dont une aile s'étendant suivant le plan de symétrie du disque est montée sur des goupilles (7, 7a) solidaires des plaques de support.

## Patentansprüche

1. Abnutzungsanzeiger für Bremsbeläge von Scheibenbremsen, mit einer Platte (8) aus isolierendem Material, in die eine leitende Einrichtung (9) mit einem Stecker (10) zum Anschließen an einen elektrischen Anzeigekreis eingebettet ist, wobei die isolierende Platte am Träger (5, 5a) des Bremsbelags in hinzufügender Weise angebracht ist und durch eine Befestigungseinrichtung (7) gehalten wird, die Bestandteil des Bremssattels ist, dadurch gekennzeichnet, daß die isolierende Platte (8) an einem ihrer Ränder einen einstückig mit der Platte (8) ausgebildeten Bügel (12) aufweist, der mit einem der Ränder des Trägers (5, 5a) für den Bremsbelag in Eingriff steht.

2. Abnutzungsanzeiger nach Anspruch 1, dadurch gekennzeichnet, daß die aus isolierendem Material bestehende Platte (8) des Abnutzungsanzeigers an ihrem unteren Abschnitt in eine im Reibbelag (4, 4a) vorgesehene Aussparung (14) eingelassen ist.

3. Abnutzungsanzeiger nach Anspruch 1, dadurch gekennzeichnet, daß die isolierende Platte (8) des Abnutzungsanzeigers an ihrem unteren Abschnitt zwei V-förmig geneigte Flächen (15, 15) aufweist, die geneigten Flächen der Aufnahme (14) entsprechen, in die der untere Abschnitt der isolierenden Platte (8) eingreift.

4. Abnutzungsanzeiger nach Anspruch 1, dadurch gekennzeichnet, daß die isolierende Platte (18, 18a) durch einen der elastischen Querarme (17c) einer kreuzförmigen Feder (17) gegen den Rand gehalten wird, wobei deren einer Schenkel, der sich längs der Symmetrieebene der Scheibe erstrecke, an mit den Tragplatten verbundenen Stiften (7, 7a) befestigt ist.

**Claims**

1. Wear indicators for disc brakes pads, comprising a pad (8) in insulating material in which is embedded a conducting member (9) having a plug (10) for connection to the electrical signalling circuit, said insulating pad (8) being mounted in detachable manner on the support (5, 5a) of the friction pad and maintained by means of a fixing member (7) forming part of the brake clip, characterized in that the insulating pad (8) is provided on one of its edges, with a clip member (12) integral with the pad (8) which is engaged in one of the edges of the friction pad support (5, 5a).

2. Wear indicators according to claim 1, characterized in that the pad (8) in insulating material of the wear indicator is embedded at its lower part in a recess (14) provided in the frictional material (4, 4a).

3. Wear indicators according to claim 1, characterized in that the insulating pad (8) of the wear indicator has, in its lower part, two faces (15, 15a) bent into a V and corresponding to bent faces of the recess (14) in which the lower part of the insulated pad (8) is engaged.

4. Wear indicators according to claim 1, characterized in that the insulated pad (18, 18a) is held against said edge by one of the transversal elastic branches (17c), of a cross-shaped spring (17), of which one wing which extends according to the plane of symmetry of the disc, is mounted on pins (7, 7a) integral with the supporting plates.

EP 0 026 137 B2

FIG.1

FIG.5

FIG.3

FIG.2

FIG.6

FIG.4

1

EP 0 026 137 B2

Fig. 7

Fig. 9

Fig. 8